# EUROPÄISCHE PATENTSCHRIFT

(11) **EP 0 941 894 B1**
(45) Veröffentlichungstag und Bekanntmachung des Hinweises auf die Patenterteilung: **07.04.2004**
(21) Anmeldenummer: 99101519.9
(22) Anmeldetag: 28.01.1999
(51) Int. Cl.: B60R 16/02

(54) **Schaltungsanordnung zur Kommunikation und Diagnose einer Vielzahl elektrischer Komponenten**
Circuit arrangement for communication and diagnostic of a plurality of electrical components
Agencement de circuit pour la communication et le diagnostic d'un grand nombre de composants électriques

(30) Priorität: 11.02.1998 DE 19805464
(43) Veröffentlichungstag der Anmeldung: 15.09.1999
(73) Patentinhaber: Volkswagen Aktiengesellschaft, 38436 Wolfsburg (DE)
(72) Erfinder: Rewald, Helge, 38518 Gifhorn (DE); Aufdermauer, Detlef, Dr., 38179 Schwülper (DE); Hoffmann, Christoph, 38446 Wolfsburg (DE); Hartwig, Ralph, 38104 Braunschweig (DE)

(56) Entgegenhaltungen:
- EP-A- 0 811 528
- DE-A- 4 110 372
- US-A- 5 588 002
- DEDELMAHR T ET AL: "THE C167CR ADDS GATEWAY FUNCTIONS TO THE AUTOMOTIVE COMPUTER" COMPONENTS,DE,SIEMENS AKTIENGESELLSCHAFT. MUNCHEN, Bd. 32, Nr. 6, 1997, Seiten 44-45, XP000766858 ISSN: 0945-1137

## Beschreibung

Die Erfindung betrifft eine Schaltungsanordnung zur Kommunikation und Diagnose einer Vielzahl elektrischer Komponenten gemäß dem Oberbegriff des Patentanspruchs 1.

Eine Schaltungsanordnung gemäß dem Oberbegriff des Anspruchs 1 ist aus "The C167CR adds gateway functions to the automotive computer", Automotive electronics 06/97, Seiten 44, 45 (XP-000 766 858) bekannt.

Es ist bekannt, in einem Kraftfahrzeug eine Vielzahl von Funktionsmodulen anzuordnen. Diese Funktionsmodule werden üblicherweise in verschiedene Gruppen eingeteilt, die beispielsweise einerseits dem Motormanagement und andererseits einer sogenannten Karosserieelektronik zugeordnet werden können. Weiterhin können Funktionsmodule vorgesehen sein, die ausschließlich einer besonderen Ausstattung eines Kraftfahrzeuges, beispielsweise Radio, Autotelefon, Navigationssysteme usw. dienen. Zum Datenausgleich und zur Ansteuerung der einzelnen Funktionsmodule ist es bekannt, die Funktionsmodule einer Gruppe mit einem Bussystem, beispielsweise einem CAN-Bus zu verbinden, so daß mittels der sogenannten Multiplextechnik, das heißt eine Mehrfachausnutzung eines Leitungsweges, die Ansteuerungen realisiert werden können. Um die einzelnen Funktionsmodule untereinander mit den für sie relevanten Daten versorgen zu können, ist es bekannt, die einzelnen Bussysteme über ein gemeinsames Gateway zu einem Fahrzeug-Netzwerk, das heißt in einem Rechnerverband von den einzelnen Bussystemen zugeordneten Rechnern, zusammenzuschalten. Dieses Gateway übernimmt beispielsweise die Freigabe der einzelnen Bussysteme für eine Informationsübertragung, beziehungsweise legt Prioritäten der Informationsübertragung und/oder eines Informationsaustausches zwischen den Informationssystemen fest. Eine derartige Schaltungsanordnung ist beispielsweise aus der DE 196 00 644 bekannt.

Für Diagnosezwecke der einzelnen elektrischen Komponenten wird dem jeweiligen Steuergerät eine sogenannte K-Leitung zugeordnet, die von außen zugänglich ist. Aufgrund der Vielzahl der elektrischen Komponenten entsteht dadurch ein erheblicher Verdrahtungsaufwand.

Der Erfindung liegt daher das technische Problem zugrunde, eine gattungsgemäße Schaltungsanordnung zu schaffen, mittels derer der Verdrahtungsaufwand für Diagnosezwecke reduziert wird.

Die Lösung des technischen Problems ergibt sich durch die Merkmale des Patentanspruches 1.

Dabei wird stets dem Mikroprozessor des das Gateway realisierenden Steuergerätes eine externe K-Leitung zugeordnet, die die separaten K-Leitungen der einzelnen Steuergeräte ersetzt. Der für die Diagnose notwendige Datentransfer kann dabei über ein zusätzliches Gateway erfolgen, d.h. mittels eines Schaltbefehls über die K-Leitung wird ein Gateway zwischen High-Speed-Bus und K-Leitung und/oder Low-Speed-Bus und K-Leitung freigeschaltet. Dadurch sind mit geringen schaltungstechnischen Modifikationen die Steuergeräte des High-Speed-Bus und des Low-Speed-Bus über die K-Leitung von außen zugänglich.

Alternativ kann zusätzlich eine externe High-Speed-Schnittstelle vorgesehen sein, wobei dann das Gateway zwischen High-Speed-Bus und Low-Speed-Bus auf ein Gateway zwischen High-Speed-Bus und High-Speed-Schnittstelle umschaltbar ist. Dazu muß zusätzlich nur die Umschaltbarkeit des dem Low-Speed-Bus zugeordneten Controllers auf unterschiedliche Transceiver gewährleistet sein. Diese Maßnahme erhöht jedoch sowohl die Auslesegeschwindigkeit als auch eine Umprogrammierung der Steuergeräte um ein Vielfaches im Vergleich zur K-Leitung. Beiden Prinzipien ist gemeinsam, daß der High-Speed-Bus nach außen hin galvanisch entkoppelt ist, so daß dieser nicht durch äußere Störeinflüsse beschädigt werden kann. Ist dies unkritisch, so kann der High-Speed-Bus auch direkt auf die High-Speed-Schnittstelle unter Umgehung eines Gateways geschaltet werden. Weitere vorteilhafte Ausgestaltungen der Erfindung ergeben sich aus den Unteransprüchen.

Die Erfindung wird nachfolgend anhand eines bevorzugten Ausführungsbeispiels näher erläutert. Die Figuren zeigen:

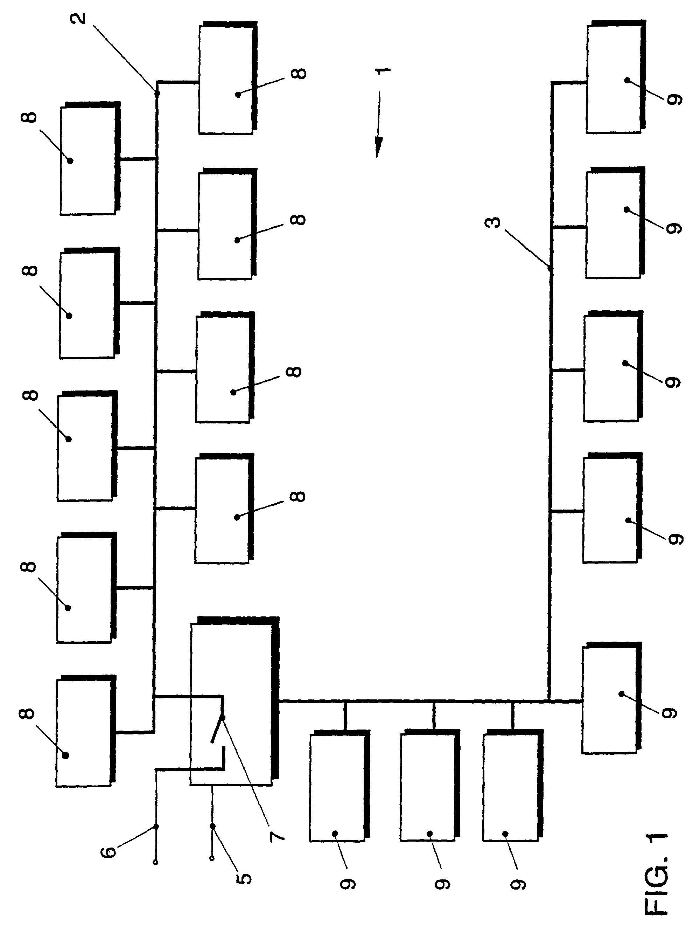

- Fig. 1: ein Blockschaltbild der Schaltungsanordnung,
- Fig. 2: ein Blockschaltbild eines Bordnetzsteuergerätes als Gateway mit über Transceiver direkt verbindbarer externer High-Speed-Schnittstelle,
- Fig. 3: ein Blockschaltbild eines Bordnetzsteuergerätes mit einer galvanisch direkt verbindbaren High-Speed-Schnittstelle,
- Fig. 4: ein Blockschaltbild mit einem umschaltbaren Controller und
- Fig. 5a-c: Strukturen von Gateway-Telegrammen.

Die Schaltungsanordnung 1 zur Kommunikation und Diagnose einer Vielzahl von elektrischen Komponenten umfaßt einen High-Speed Bus 2, nachfolgend CAN-Antrieb 2 genannt, einen Low-Speed-Bus 3, nachfolgend CAN-Komfort 3 genannt, ein Bordnetzsteuergerät 4, eine mit dem Bordnetzgerät 4 verbundene K-Leitung 5 für Diagnosezwecke und eine externe Schnittstelle 6, nachfolgend CAN-Extern 6 genannt. Im Bordnetzsteuergerät 4 ist ein Schalter 7 angeordnet, mittels dessen der CAN-Antrieb 2 direkt auf den CAN-Extem 6 schaltbar ist. Mit dem CAN-Antrieb 2 sind eine Vielzahl von Steuergeräten 8 von elektrischen Komponenten verbunden, für deren Funktionalität ein schneller Datenaustausch notwendig ist. In einem Kraftfahrzeug sind dies beispielsweise das Motorsteuergerät, das Getriebesteuergerät, die Airbag-Steuerung, die ABS-Steuerung und andere Komponenten, die für Funktionalität und Sicherheitsverhalten des Kraftfahrzeuges essentiell sind. Analog dazu sind Steuergeräte 9 von zeitunkritischen Komponenten mit dem CAN-Komfort 3 verbunden, wie beispielsweise elektrische Fensterheber in einem Kraftfahrzeug. Die Steuergeräte 8 kommunizieren untereinander ausschließlich über den CAN-Antrieb 2, wobei die Art der Datenübertragung nachfolgend noch ausführlicher beschrieben wird. Ebenso kommunizieren die Steuergeräte 9 ausschließlich über den CAN-Komfort 3 miteinander. Allerdings ist eine vollständige Entkopplung des CAN-Antriebs 2 und des CAN-Komforts 3 technisch nicht sinnvoll, da einige Steuergeräte 9 vom CAN-Komfort 3 Daten von Steuergeräten 8 des CAN-Antriebs 2 benötigen und umgekehrt, so daß ein Datenaustausch zwischen dem CAN-Antrieb 2 und dem CAN-Komfort 3 möglich sein muß. Dazu dient das Bornetzsteuergerät 4, das als Gateway zwischen dem CAN-Antrieb 2 und CAN-Komfort 3 arbeitet. Das Bordnetzsteuergerät 4 trennt dazu galvanisch den CAN-Antrieb 2 vom CAN-Komfort 3, ermöglicht jedoch softwaremäßig einen Datenaustausch von ausgewählten Informationen. Für Diagnosezwecke dient die K-Leitung 5, die eine relativ geringe Datenübertragungsrate aufweist. Die Diagnose der Steuergeräte 8 wird über ein zusätzliches Gateway zwischen K-Leitung 5 und dem CAN-Antrieb 2 realisiert. Analog erfolgt die Diagnose der Steuergeräte 9 über ein Gateway zwischen der K-Leitung 5 und dem CAN-Komfort 3. Dadurch wird die Diagnose aller Steuergeräte 8, 9 mittels nur einer einzigen K-Leitung 5 realisiert. Des weiteren kann über den Schalter 7 der CAN-Antrieb 2 auf den CAN-Extem 6 freigeschaltet werden. Dies ermöglicht einen direkten Zugriff von außen auf den CAN-Antrieb 2. Da die Übertragungsrate über den CAN-Extem 6 ein vielfaches höher ist als die der K-Leitung 5, erlaubt dies eine leistungsfähigere Diagnose, da neben den internen Informationen der Steuergeräte 8, 9 auch die Originaldaten der Kommunikation für die Diagnose ausgewertet werden können. Die Steuergeräte 9 des CAN-Komforts 3 sind für den CAN-Extem 6 über das Gateway zwischen CAN-Antrieb 2 und CAN-Komfort 3 zugänglich. Neben der verbesserten Diagnosemöglichkeit kann über den CAN-Extern 6 eine Bandprogrammierung der einzelnen Steuergeräte 8, 9 bzw. des Gateways vorgenommen werden. Ergänzend sei nur angemerkt, daß das Bordnetzsteuergerät 4 neben den zuvor beschriebenen Funktionen noch andere Funktionen ausüben kann, die jedoch nicht erfindungswesentlich sind.

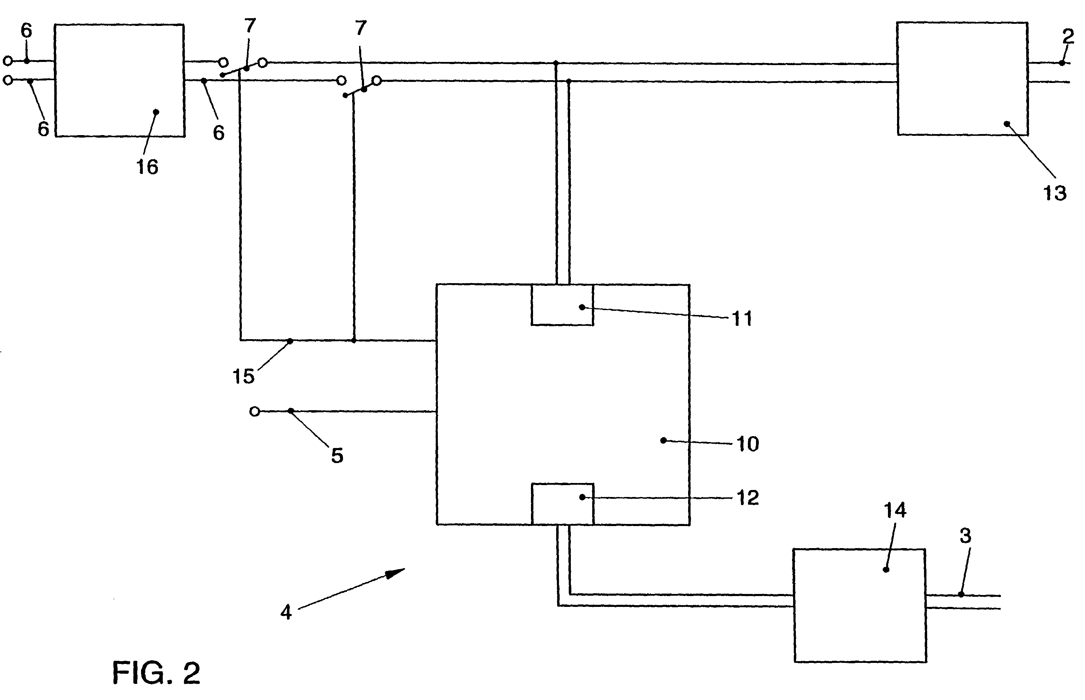

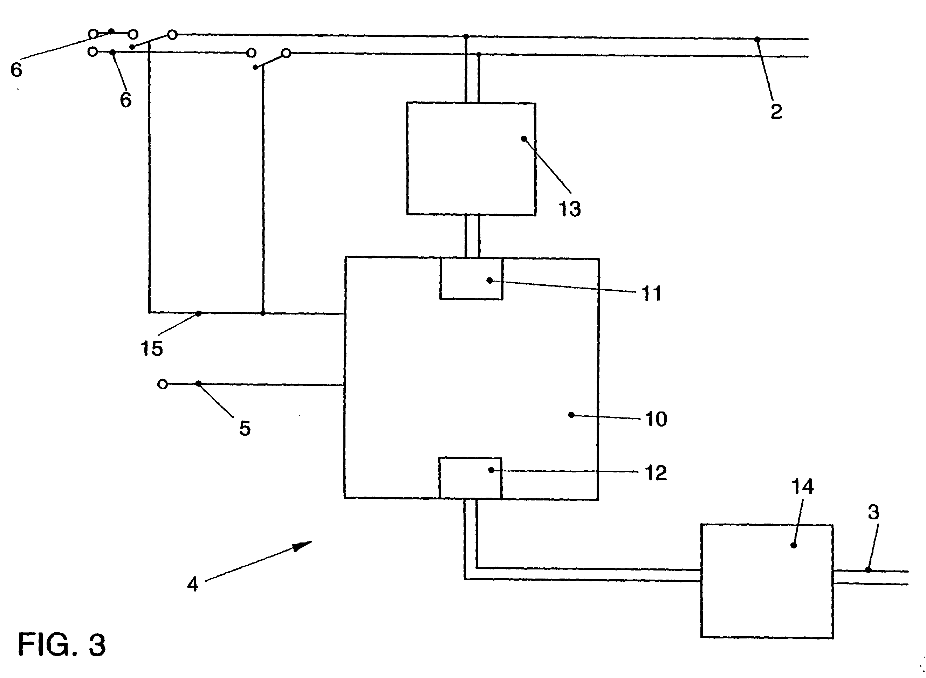

In der Fig. 2 ist das Bordnetzsteuergerät 4 mit seiner Vernetzung auf schaltungstechnischer Ebene dargestellt. Das Bordnetzsteuergerät 4 umfaßt einen Mikroprozessor 10, der zwei intern oder extern angeordnete CAN-Controller 11, 12 aufweist, über die jeweils der bidirektionale Datentransfer mit dem CAN-Antrieb 2 bzw. dem CAN-Komfort 3 erfolgt. Da der CAN-Antrieb 2 bzw. der CAN-Komfort 3 außerhalb der Steuergeräte 8, 9 verwendet werden und damit der rauhen Fahrzeugumgebung ausgesetzt sind, sind den CAN-Controllern 11, 12 jeweils ein Transceiver 13, 14 zugeordnet. Über die K-Leitung 5 kann dem Mikroprozessor 10 signalisiert werden, daß der CAN-Extem 6 freigeschaltet werden soll. Zur Sicherung vor Zugriff von Unbefugten kann dazu beispielsweise vorab ein Codewort oder ähnliches abgefragt werden. Nach der erfolgreichen Überprüfung der Zugangsberechtigung durch den Mikroprozessor 10 schaltet dieser über eine Steuerleitung 15 die Schalter 7, so daß der CAN-Antrieb 2 über einen Transceiver 16 direkt mit dem CAN-Extem 6 verbunden ist. Der Mikrocontroller 10 überwacht die Datenübertragungen von CAN-Antrieb 2 zum CAN-Extern 6 und unterbricht die Verbindung, falls sicherheitsrelevante Daten, wie beispielsweise die Code-Kennung der Wegfahrsperre, übertragen werden. Alternativ kann, wie in Fig.3 dargestellt, der CAN-Antrieb 2 galvanisch direkt über den Schalter 7 mit dem CAN-Extem 6 unter Einsparung des Transceivers 16 verbunden werden. Der Transceiver 13 wird derart angeordnet, daß dieser nur in der Kommunikation mit dem CAN-Controller 11 zum Tragen kommt, nicht jedoch beim Datentransfer zum CAN-Extern. Nachdem über die K-Leitung 5 ein Schaltbefehl für den Schalter 7 an den Mikroprozessor 10 übergeben wurde, steht die K-Leitung 5 für weitere Diagnosezwecke zur Verfügung. Über die K-Leitung 5 kann ein Gateway zwischen K-Leitung 5 und CAN-Antrieb 2 und/oder ein Gateway zwischen K-Leitung 5 und CAN-Komfort 3 freigeschaltet werden. Somit kann beispielsweise über das Gateway zwischen K-Leitung 5 und CAN-Komfort 3 eine Diagnose der Steuergeräte 9 durchgeführt werden, während gleichzeitig über den CAN-Extem 6 die Steuergeräte 8 umprogrammiert werden.

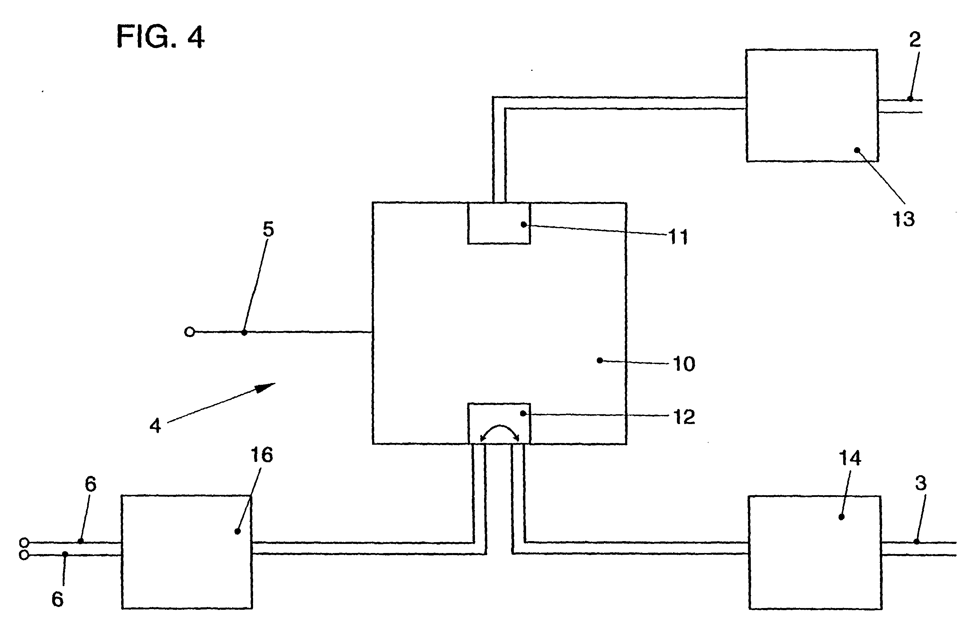

Da eine elektrische Verbindung von CAN-Extem 6 und CAN-Antrieb 2 auch Probleme in sich bergen kann, beispielsweise bezüglich der elektromagnetischen Verträglichkeit EMV, kann in einer alternativen Ausführungsform gemäß Fig. 4 der CAN-Extem 6 über den CAN-Controller 12 des CAN-Komforts 3 angesteuert werden. Dazu wird eine Umschaltmöglichkeit zwischen dem CAN-Komfort 3 und dem CAN-Extem 6 am CAN-Controller 12 vorgesehen, wobei berücksichtigt werden muß, daß es sich bei dem Transceiver 14 um einen Low-Speed-Transceiver und dem Transceiver 16 um einen High-Speed-Transceiver handelt. Dadurch wird eine galvanische Entkopplung zwischen CAN-Extem 6 und dem CAN-Antrieb 2 erreicht. Der Verlust an Zugriffszeit gegenüber dem vorangegangenen Ausführungsbeispiel beträgt nur die Gatewaystrecke zwischen den CAN-Controllem 11, 12.

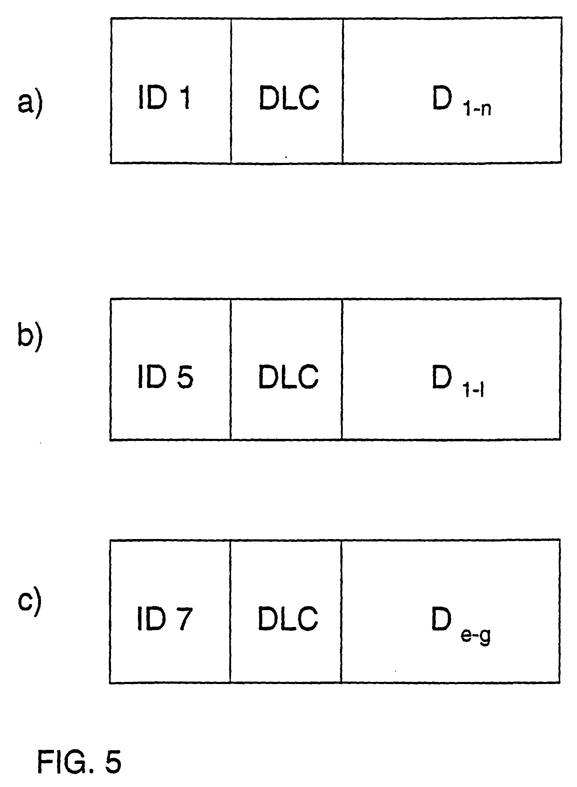

In der Fig. 5 sind beispielhaft Gateway-Telegramme für die Kommunikation zwischen den beiden CAN-Controllern 11, 12 dargestellt. Allen Gateway-Telegrammen ist gemeinsam, daß diese als Datenheader eine Telegramm-Identifikationsnummer ID und eine Kennung DLC für die nachfolgende Datenlänge aufweisen. Anhand der ID ist ableitbar, von welchem Steuergerät 8, 9 das Telegramm gesendet wurde und welchen Inhalt das Telegramm aufweist. Aus der DLC wiederum ist ableitbar, wie lang welche Daten D des Telegrammes sind. Anhand der ID kann beispielsweise jedes Steuergerät 8 auf dem CAN-Antrieb 2 erkennen, ob ein Telegramm für ihn Daten beinhaltet und kann das Telegramm ganz oder teilweise einlesen. Da aus Busauslastungs-Gründen nicht alle auf dem CAN-Antrieb 2 versendeten Daten auf den CAN-Komfort 3 übertragen werden sollen, generiert der Mikroprozessor 10 neue Telegramme. Dazu werden einem bestimtmen ID Daten D verschiedener Telegramme zugeordnet. In den Telegrammen aus Fig. 5b und c ist dies beispielhaft dargestellt. Diese erstellten Telegramme werden dann über das Gateway dem CAN-Controller 12 zur Weiterleitung zum CAN-Komfort 3 zur Verfügung gestellt. Der Datentransfer vom CAN-Komfort 3 zum CAN-Antrieb 2 verläuft analog. Diese Gateway-Telegramme ergeben sich bezüglich Datenstruktur, Kennung und Sendezeitpunkt aus den Datenfestlegungen für CAN-Antrieb 2 und CAN-Komfort 3. Die dargestellte Telegrammstruktur kann darüber hinaus um eine zusätzliche Kennung erweitert werden. Die Daten D eines Telegrammes können von verschieden Steuergeräten 8, 9 stammen, die weder alle synchron noch kontinuierlich arbeiten. Daher können die einzelnen Daten eines Telegrammes zu verschiedenen Zeitpunkten ermittelt oder erzeugt worden sein. Zur Unterscheidung, ob ein Datum kürzlich oder vor längerer Zeit ermittelt wurde, kann diesem ein zusätzliches Qualifizier-Bit zugeordnet werden, was über den Entstehungszeitpunkt Auskunft gibt. Beispielsweise aufgrund der funktionellen Erweiterung eines Steuergerätes 9 kann es notwendig werden, daß dieses Steuergerät 9 zusätzliche Daten von anderen Steuergeräten 8 des CAN-Antrieb 2 benötigt. Um nicht die gesamte Datenfestlegung bei geringen Modifikationen zu ändern, gibt es verschiedene Möglichkeiten, die einzeln oder in Kombination zur Anwendung kommen können.
Eine Lösungsmöglichkeit besteht darin, freiprogrammierbare Telegramme für jede Gateway-Richtung zur Verfügung zu stellen. Die Dateninhalte dieser Telegramme werden byteweise aus beliebigen Telegrammen zusammengestellt, wobei Identifier ID, Datenlänge DLC und Sendezyklus freiprogrammierbar sind. Eine andere Möglichkeit besteht in der Spiegelung ganzer Telegramme mit parametrierbaren Identifier ID. Dabei werden die Datenstruktur und die Sendezyklen durch das Quell-Steuergerät festgelegt und bleiben unverändert. Durch die Änderung des Identifiers ID wird dann dieses Telegramm einem anderen Steuergerät auf der anderen Seite des Gateways zugeordnet, wobei dies austauschbar oder ergänzend zur ursprünglichen Zuordnung sein kann. Außerdem können für jede Richtung im Gateway Durchlaßfilter mit parametriebaren Filterbereichen implementiert werden. Dabei kann zusätzlich über die Filterbereiche sichergestellt werden, daß sicherheitsrelevante Daten wie beispielsweise die Wegfahrsperre prinzipiell nicht vom CAN-Antrieb 2 auf den CAN-Komfort 3 übertragen werden. Eine entsprechende Beschränkung kann auch für die Parametrierung bzw. Programmierung vorgesehen werden. Die Parametrierung erfolgt bei den verschiedenen Lösungsalternativen bevorzugt über EEPROMs.

## Patentansprüche

1. Schaltungsanordnung zur Kommunikation und Diagnose einer Vielzahl von Steuergeräten elektrischer Komponenten in einem Kraftfahrzeug, umfassend einen High-Speed-Bus und einen Low-Speed-Bus, die über ein von einem Mikroprozessor mit zugehörigen Busschnittstellen gebildetes erstes Gateway kommunizieren, wobei der Mikroprozessor (10) mit einer externen K-Leitung (5) ausgebildet ist, über die ein externes Diagnosegerät anschaltbar ist,
**dadurch gekennzeichnet, dass**
über die K-Leitung (5) ein Schaltbefehl übertragen wird, so dass der High-Speed-Bus (2) über ein zweites Gateway oder der Low-Speed-Bus (3) über ein drittes Gateway auf die K-Leitung (5) schaltbar ist,
wobei der für die Diagnose notwendige Datentransfer vom High-Speed-Bus (2) oder vom Low-Speed-Bus (3) über das zweite bzw. dritte Gateway erfolgt, so dass die Steuergeräte (8,9) vom High-Speed-Bus (2) oder vom Low-Speed-Bus (3) über die K-Leitung (5) von außen zugänglich sind.

2. Schaltungsanordnung nach Anspruch 1, **dadurch gekennzeichnet, dass** die Schaltungsanordnung mit einer High-Speed-Schnittstelle CAN-Extern (6) ausgebildet ist, über die das externe Diagnosegerät anschaltbar ist oder eine Bandprogrammierung vornehmbar ist, wobei die High-Speed-Schnittstelle CAN-Extern (6) direkt über ein Schaltelement (7) oder über das erste Gateway mit dem High-Speed-Bus (2) verbindbar ist, wobei das erste Gateway vom High-Speed-Bus (2) zum Low-Speed-Bus (3) oder zur externen High-Speed-Schnittstelle CAN-Extem (6) umschaltbar ist.

3. Schaltungsanordnung nach Anspruch 1 oder 2, **dadurch gekennzeichnet, dass** das zweite und dritte Gateway zwischen der K-Leitung (5) und dem High-Speed-Bus (2) bzw. Low-Speed-Bus (3) jeweils fest implementiert sind oder das zweite und dritte Gateway als ein zwischen High-Speed-Bus (2) und Low-Speed-Bus (3) umschaltbares Gateway ausgebildet ist.

4. Schaltungsanordnung nach einem der Ansprüche 2 oder 3, **dadurch gekennzeichnet, dass** über die K-Leitung (5) das dritte Gateway zwischen K-Leitung (5) und Low-Speed-Bus (3) freischaltbar ist, während gleichzeitig der High-Speed-Bus (2) über den Schalter (7) auf die externe High-Speed-Schnittstelle (6) geschaltet ist.

5. Schaltungsanordnung nach einem der Ansprüche 2 bis 4, **dadurch gekennzeichnet, dass** dem Low-Speed-Bus (3) ein CAN-Controller (12) zugeordnet ist, wobei an dem CAN-Controller (12) eine Umschaltmöglichkeit vorgesehen ist, für eine Umschaltbarkeit des CAN-Controllers (12) zwischen einem Low-Speed-Transeiver (14) und einem High-Speed-Transeiver (16).

6. Schaltungsanordnung nach einem der Ansprüche 2 bis 4, **dadurch gekennzeichnet, dass** durch den Schalter (7) der High-Speed-Bus (2) über einen Transeiver (16) mit der externen High-Speed-Schnittstelle (6) verbindbar ist.

7. Schaltungsanordnung nach einem der vorangegangenen Ansprüche, **dadurch gekennzeichnet, dass** die Gateway-Telegramme mindestens teilweise freiprogrammierbar sind und/oder die Gateway-Telegramme teilweise mit freiparametrierbaren Identifiern ID ausgebildet sind und/oder parametrierbare Durchlassfilter im ersten Gateway zwischen High-Speed-Bus (2) und Low-Speed-Bus (3) implementiert sind.

## Claims

1. Circuit arrangement for communicating with and performing diagnostics on a plurality of control devices of electrical components in a motor vehicle, comprising a high-speed bus and a low-speed bus which communicates via a first gateway which is formed by a microprocessor with associated bus interfaces, the microprocessor (10) being embodied with an external K line (5) via which an external diagnostic device can be connected, **characterized in that** a switching instruction is transmitted via the K line (5) so that the high-speed bus (2) can be connected to the K line (5) via a second gateway, or the low-speed bus (3) can be connected to the K line (5) via a third gateway, the transfer of data from the high-speed bus (2) or from the low-speed bus (3) which is necessary for the diagnostics taking place via the second or third gateway so that the control devices (8, 9) are accessible from the outside from the high-speed bus (2) or from the low-speed bus (3) via the K line (5).

2. Circuit arrangement according to Claim 1, **characterized in that** the circuit arrangement is embodied with a high-speed interface CAN external (6) via which the external diagnostic device can be connected or band programming can be performed, it being possible to connect the high-speed interface CAN external (6) to the high-speed bus (2) directly via a switching element (7) or via the first gateway, it being possible to switch over the first gateway from the high-speed bus (2) to the low-speed bus (3) or to the external high-speed interface CAN external (6).

3. Circuit arrangement according to Claim 1 or 2, **characterized in that** the second and third gateways are each permanently implemented between the K line (5) and the high-speed bus (2) or low-speed bus (3), or the second and third gateways are embodied as a gateway which can be switched over between the high-speed bus (2) and low-speed bus (3).

4. Circuit arrangement according to one of Claims 2 or 3, **characterized in that**, via the K line (5), the third gateway can be freely enabled between the K line (5) and low-speed bus (3), while at the same time the high-speed bus (2) is connected to the external high-speed interface (6) via the switch (7).

5. Circuit arrangement according to one of Claims 2 to 4, **characterized in that** a CAN controller (12) is assigned to the low-speed bus (3), a switching-over possibility being provided on the CAN controller (12) so that the CAN controller (12) can be switched over between a low-speed transceiver (14) and a high-speed transceiver (16).

6. Circuit arrangement according to one of Claims 2 to 4, **characterized in that**, by means of the switch (7), the high-speed bus (2) can be connected to the external high-speed interface (6) via a transceiver (16).

7. Circuit arrangement according to one of the preceding claims, **characterized in that** the gateway telegrams can at least be partially freely programmed and/or the gateway telegrams are partially embodied with freely parametrizable identifiers ID and/or parametrizable pass filters are implemented in the first gateway between the high-speed bus (2) and low-speed bus (3).

## Revendications

1. Agencement de circuit pour la communication et le diagnostic d'un grand nombre de composants électriques de dispositifs de commande dans un véhicule automobile, comportant un bus rapide et un bus lent qui communiquent avec une première passerelle formée d'un microprocesseur avec les interfaces de bus correspondantes, le microprocesseur (10) étant formé d'une liaison K (5) externe permettant le raccordement d'un dispositif de diagnostic externe
**caractérisé en ce que** la liaison K (5) transmet un ordre de commutation permettant de commuter le bus rapide (2) à travers une deuxième passerelle ou le bus lent (3) à travers une troisième passerelle sur la liaison K (5), le transfert de données nécessaire pour le diagnostic, du bus rapide (2) ou du bus lent (3) à travers la deuxième, respectivement la troisième passerelle, s'effectuant de telle sorte que les dispositifs de commande (8, 9) du bus rapide (2) ou du bus lent (3) sont accessibles de l'extérieur à travers la liaison K (5).

2. Agencement de circuit selon la revendication 1, **caractérisé en ce que** l'agencement de circuit est formé d'une interface rapide CAN externe (6) permettant de raccorder le dispositif de diagnostic externe ou d'entreprendre une programmation de bande, l'interface rapide CAN externe (6) pouvant être relié directement à travers un élément de commutation (7) ou à travers la première passerelle avec le bus rapide (2), la première passerelle pouvant être commutée du bus rapide (2) au bus lent (3) ou à l'interface externe rapide CAN externe (6).

3. Agencement de circuit selon la revendication 1 ou 2, **caractérisé en ce que** les deuxième et troisième passerelles entre la liaison K (5) et le bus rapide (2) respectivement le bus lent (3) sont chaque fois implémentées de manière fixe ou que les deuxième et troisième passerelles sont sous la forme d'une passerelle commutable entre le bus rapide (2) et le bus lent (3).

4. Agencement de circuit selon une des revendications 2 ou 3, **caractérisé en ce que** la troisième passerelle entre la liaison K (5) et le bus lent (3) peut être commuté en circuit ouvert à travers la liaison K (5) alors que simultanément le bus rapide (2) est commuté sur l'interface rapide externe (6) à travers le commutateur (7).

5. Agencement de circuit selon une des revendications 2 à 4, **caractérisé en ce qu'**un contrôleur CAN (12) est attribué au bus lent (3), une possibilité de commutation étant prévue sur le contrôleur CAN (12) pour pouvoir commuter le contrôleur CAN (12) entre un émetteur récepteur lent (14) et un émetteur récepteur rapide (16).

6. Agencement de circuit selon une des revendications 2 à 4, **caractérisé en ce que** le commutateur (7) permet de relier le bus rapide (2) à travers un émetteur récepteur (16) avec l'interface rapide externe (6).

7. Agencement de circuit selon une des revendications précédentes, **caractérisé en ce que** les télégrammes de la passerelle peuvent être programmés librement au moins partiellement et/ou que les télégrammes de la passerelle sont partiellement formés avec des numéros d'identification ID librement paramétrables et/ou que des filtres passants paramétrables sont implémentés dans la première passerelle entre le bus rapide (2) et le bus lent (3).
